(19) Europäisches Patentamt
European Patent Office
Office européen des brevets

(11) **EP 2 980 728 A1**

(12) **EUROPEAN PATENT APPLICATION**

(43) Date of publication:
**03.02.2016 Bulletin 2016/05**

(51) Int Cl.:
***G06K 9/00*** *(2006.01)*

(21) Application number: **14382303.7**

(22) Date of filing: **01.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Imersivo, S.L.**
**28002 Madrid (ES)**

(72) Inventors:
• **Escalera Guerrero, Sergio**
**08193 BELLATERRA (ES)**

• **Antens, Jacobus Cornelis Adrianus Maria**
**08193 BELLATERRA (ES)**
• **Gonzalez Sabate, Jordi**
**08193 BELLATERRA (ES)**
• **Borras Angosto, Agnés**
**08193 BELLATERRA (ES)**
• **Abella Esplugas, Jordi**
**08193 BELLATERRA (ES)**

(74) Representative: **Sugrañes Patentes y Marcas**
**Calle Provenza 304**
**08008 Barcelona (ES)**

(54) **Procedure for identifying a hand gesture**

(57) Procedure (100) for identifying a hand gesture (1) of a user (2) that comprises locating (101) a hand in a 3D space (3) and obtaining (102) at least one 2D projection (4) from a 3D point cloud (5) representing said hand. For each 2D projection that is obtained, the following steps are carried out: scaling (103) the 2D projection; extracting (104) a feature vector (v) from the scaled 2D projection; normalizing (105) each feature and identifying (106) a candidate hand gesture from the normalized feature vector by means of a classifier previously trained.

**Fig. 1**

**Description**

Technical sector of the invention

The invention related to a procedure for identifying hand gestures made by one or several users. This procedure may be used as an input interface in a computer program.

Background of the invention

Procedures are known for identifying the hand gesture of a user that use sensors to obtain a depth image of a 3D space, such as the Microsoft Kinect sensor. After obtaining a point cloud through the communication interface with the sensor, these procedures process the point cloud to obtain the part corresponding to the hand of a user, for example by means of the extraction of a skeletal model of said point cloud. This part of the point cloud that would correspond to the hand of the user is normally compared with a database to identify the hand gesture. However, these procedures are unreliable and not always allow the correct identification of the hand gesture. An example of this procedure is described in patent US2014035805.

Other procedures, such as the one described in patent US201336524, are also known, which use parameters of the depth image in order to, in an offline stage, train a classifier, and in an online stage, identify hand gestures based on parameters extracted from the depth image by means of said classifier. However, the procedure described in this document requires the prior processing of the point cloud in order to rotate and scale the image of the hand for the normalization thereof, with which, in order to correctly identify hand gestures in random positions, a prior adaptation of the depth image of the hand is required to obtain satisfactory results.

Therefore, one of the objectives of the present invention is to disclose a procedure for identifying a hand gesture made by a user in a simpler and more reliable manner.

Another objective of the present invention is to present an alternative to the known hand gesture identification procedures.

Explanation of the invention

The procedure for identifying the hand gesture of a user of the present invention is of the type that comprises locating a hand in a 3D space and obtaining, within a timespan and by following the trajectory of said hand, at least one 2D projection based on a point cloud representing said hand. The invention also provides the undertaking of said procedure simultaneously in several hands of several users, by conveniently following each one of the hands and associating them to their respective user.

In essence, the procedure is characterized in that, for each 2D projection that is obtained during the timespan, in an online stage and in the form of a photogram, the following steps are carried out: scaling the depth image to predetermined scaling dimensions; extracting a feature vector from the scaled 2D projection comprising the proportion of pixels covered by the contour of the hand, such as the percentage or the x times one, the number of fingers counted in the hand, the average angle formed by the fingers counted in the hand, the time invariant coefficients and the normalized Fourier coefficients. Comprising, in addition, the steps of normalizing each feature of the feature vector, generating a normalized feature vector; and identifying a candidate hand gesture based on the normalized feature vector though a classifier previously trained. By scaling the depth image to predetermined scaling dimensions, the differentiation among hand gestures is drastically improved, given that, for example, in order to differentiate between the "fist" hand gesture and the "index" hand gesture, the addition of the finger would produce a general reduction in the size of the hand, thereby facilitating the differentiation thereof with its neighboring class of just fist. This way, by extracting the feature vector from this scaled 2D projection, the hand gestures are more easily differentiated, thereby achieving a better identification of the hand gesture. Naturally, the proportion of pixels covered by the contour of the hand must be interpreted as if it included any other proportion that allows discerning the proportion of pixels covered by the contour of the hand, such as, for example, the proportion of pixels that is not covered by the contour of the hand.

In a variant of interest, the step of normalizing each feature of the feature vector is carried out based on previously determined maximum and minimum values of each feature.

In a variant of interest, after obtaining at least two candidate hand gestures, the procedure comprises calculating the mode among the identified candidate hand gestures to confirm the hand gesture, thereby preventing specific errors. It is provided that the mode will be calculated based on the candidate hand gestures stored in a queue with a predefined size, for example, a queue with 15 positions, such that, for each new candidate hand gesture, the queue will move and said candidate hand gesture will be added to the queue in the form of a fifo (first in, first out) queue, calculating the mode of the queue to confirm the hand gesture. Even though this step supposes a delay in the identification of the hand gesture, it is provided that the speed in the acquisition of depth images and processing will make this delay almost imperceptible.

In addition, even though there will be a transient phase while the vector is filled wherein the procedure may not be reliable, once the stationary stage is reached, the mode of the hand gestures in the entire vector will be calculated. This transient phase may last a few seconds.

In order to further ensure the result of the identification of the hand gesture of the user, it is also provided that the procedure also comprises a stage of verifying the confirmed hand gesture after the calculation of the mode, wherein a minimum frequency of repetitions of the confirmed hand gesture is expected, which preferably will be at least 2. This way, the only way there can be a change in the identified hand gesture is if the result of the calculation of the mode in successive times changes, thereby preventing the propagation of an error in the detection. In order to ensure this confirmation, it can be established that in the stage of verifying the calculated hand gesture, the minimum frequency of repetitions of the confirmed hand gesture is at least 9, providing further reliability to the procedure. As provided above, these additional stages of calculation and verification can delay the decision of the hand gesture that is finally identified, but given the speed of capture of depth images and processing, it is provided that, after a few seconds of operation, the procedure will reach a permanent regime wherein it accumulates a delay of a few milliseconds, which will be imperceptible for the user but will lead to reliability in the identification of the hand gesture that will prove to be quite advantageous.

It is also disclosed that the procedure also comprises storing the position of the located 3D region enclosing the representation of the hand of the user, such that the position of the hand can be known in each timespan. Naturally, if there is more than one hand, the temporary position of each one of the hands will have to be stored, associated, if necessary, to a certain user.

The position of the stored 3D region is also smoothed by applying the arithmetic mean of at least one of the last detected positions, in order to avoid sudden motions of the hand. Preferably, it will be smoothed by using the arithmetic mean of the last 6 detected positions.

If there is more than one hand, or for example several users with respective hands and only the gesture of one hand is desired to be identified, that is to say, if there is a plurality of 3D regions enclosing respective point clouds representing hands of users, only the gesture of the hand making a pre-established motion will be identified, such as an ascending motion exceeding a predetermined threshold. This way, if for example a user must interact with a program, only the one making the pre-established motion, such as a circular motion or an ascending motion exceeding a predetermined threshold in the form of a turn request, will be the one to be associated and in which the full procedure will be carried out to identify and follow the hand gesture. Advantageously, in this manner, having to identify the entirety of the hand gestures available is avoided, with which it is possible to carry out the procedure with apparatuses with less resources and obtain a quicker response, since the full processing does not have to be carried out.

According to another variant of the invention, the step of locating the 3D region enclosing a point cloud representing the hand of a user comprises capturing a point cloud projected over the user and determining a skeletal model, for example, by means of a 14-joint skeletal model, the 3D region enclosing a point cloud representing the hand being determined as the one between the joint corresponding to the wrist and the end of the skeletal model,

The invention also discloses that the feature vector only comprises the first 44 normalized Fourier coefficients, this number of coefficients being sufficient to classify the hand gesture. These normalized Fourier coefficients will be obtained based on a shape signature of the contour of the hand, such as a function formed by the complex coordinates of a set of sampled points of the contour of the hand. Naturally, given that the series formed by the modules of the Fourier transform will be symmetrical, it will only be necessary to calculate half of the coefficients.

According to another variant of interest, the procedure also comprises a prior stage of configuration and training of a classifier in an offline stage that comprises, for several known hand gestures, locating a hand in a 3D space, forming the known hand gesture, and obtaining in a timespan at least one 2D projection based on a 3D point cloud representing said hand. Together with the dimensions of the previously obtained 2D projections and the dimensions of said 2D projection, the following must be carried out: solving the predetermined scaling dimensions as its arithmetic mean; scaling the content of the 2D projection to these predetermined scaling dimensions; and extracting a feature vector from the 2D projection comprising the proportion of pixels covered by the contour of the hand, that is to say, the percentage or the x times one, the number of fingers counted in the hand, the average angle formed by the fingers counted in the hand, the time invariant coefficients and the normalized Fourier coefficients, just like in the process detailed above for the identification. Preferably, only the first 44 Fourier coefficients are required, given that it has been observed that they are sufficient to correctly identify the hand gesture. After obtaining a set of feature vectors from several 2D projections corresponding to the same known hand gesture, the following is carried out: establishing the parameters for the normalization of the features of the feature vector, such as the maximum and minimum value of each feature for the set of feature vectors; normalizing the features of each feature vector, which can be carried out, for example, based on the maximum and minimum values established for each feature; and training a classifier with the set of normalized feature vectors corresponding to the same known hand gesture to predict said known hand gesture. The normalization of the features of each feature vector can be alternatively carried out based on subtracting the mean and dividing by the standard deviation or another normalization by known feature. It is also provided that in a simpler variant, the step of obtaining the 2D projection from the 3D point cloud representing the hand, both in the offline and in the online parts, can be modified by directly obtaining the 2D projection by means of a video or photographic camera.

The invention also discloses a computer program and a data processing apparatus adapted to carry out the procedure for recognizing a hand gesture of a user of the present invention.

The invention also discloses a system for the recognition of a hand gesture that comprises the apparatus for recognizing a hand gesture of a user connected to means for obtaining a 3D region enclosing a representation of the hand of a user.

Brief description of the drawings

In order to supplement the description being made and with the purpose of facilitating the comprehension of the characteristics of the invention, a set of drawings are attached to the present specification representing the following in an illustrative rather than limitative manner:

Fig. 1 represents a system to undertake the procedure of the present invention;
Fig. 2 shows a full depth image of a user captured by means of the system of Fig. 1;
Figs. 3a, 3b and 3c represent the 3D point cloud of the hands of the user shown in Fig. 2;
Fig. 4 represents the 2D projection obtained based on the 3D point cloud of Figs. 3a, 3b and 3c;
Fig. 5 represents a scheme of the identification procedure of a hand gesture of the present invention;
Fig. 6a represents a sequence of 2D projections;
Figs. 6b and 6c represent the feature vector and the normalized feature vector of each one of the 2D projections of Fig. 6a;
Fig. 7 represents an example of operation of the stages of confirmation and verification of the identified hand gesture;
Fig. 8 represents an example of hand gestures that can be identified; and
Fig. 9 represents a scheme of the stage of configuration and training of the model of the procedure.

Detailed description of the drawings

The procedure 100 for identifying a hand gesture 1 of a user 2 of the present invention allows, by means of the processing of a 3D point cloud 5 representing one or more hands 1 of one or more users 2, determining the hand gesture 1 from among a set of previously known potential hand gestures 1. This way, the procedure 100 can be used in the form of an input interface of a computer program in order for the user 2 to, by means of the motion of his or her hand 1 and the gestures of said hand 1, interact with a computer program. The procedure to be described can be implemented in a library that can be consulted by the different computer programs that need to know the position or gesture of the hand 1 of the user 2 by means of corresponding functions that have been conveniently defined.

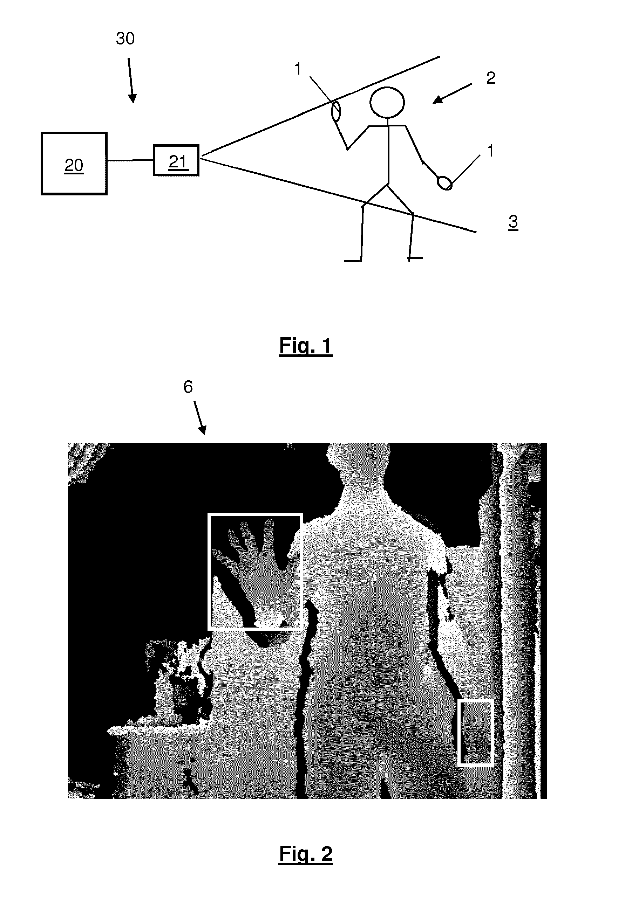

Fig. 1 shows a system 30 by means of which the procedure 100 of the present invention can be carried out. As observed therein, the system 30 is provided with an apparatus 20 that is conveniently programmed to carry out the procedure 100. The apparatus 20 is connected to means for obtaining a 3D region 21 that will capture the scene 3 in the 3D space where the user 2 is, in order to obtain a representation in the form of a 3D point cloud 5. Based on the depth image shown in Fig. 2, where each pixel represents, in a greyscale, the distance between the object represented by said pixel and the means for obtaining a 3D region 21, the point cloud 5 will be obtained based on the parameters intrinsic to the sensor, which will serve to determine the distance of separation among pixels.

For example, when a partial 3D view of the scene 3 is captured with the Microsoft Kinect sensor, a depth image 6 is obtained that can be observed as the image of Fig. 2, for example in VGA resolution (640x480 pixels), with a depth of 11 bits, this depth, and therefore, the grey tone of each pixel, being proportional to the distance between the sensor and the object captured in said pixel.

The different sensors that will become part of the means for obtaining a 3D region 21 will capture multimodal data of the user 2 and these data will be processed in the manner to be indicated below by the apparatus 20 in order to determine the hand gesture 1 of the user 2. It is therefore necessary for the sensors forming the means for obtaining a 3D region 21 to capture a partial 3D view of the scene 3, for example by means of the Microsoft Kinect sensor, to finally obtain a set of 3D points representing the scene 3.

In addition to the general depth image 6, the means for obtaining a 3D region 21 can provide, on a supplementary basis, a digital image of the visible spectrum of the scene 3, which may be registered together with the point cloud 5. Naturally, it is provided that additional sensors may be incorporated to improve the attainment of the point cloud 5, in order that, even if there are different sensors, the different input data can be converted into a single 3D point cloud 5 plus its associated digital image.

Based on the general depth image 6 representing the scene 3, in the procedure 100, the hands 2 of the user 1 must be located 101 to identify the gesture thereof. In the depth image 6 shown in Fig. 2, two hands 1 can be located, framed by respective squares.

In the example of an embodiment to be described below, we will only mention the identification of the gesture of one of the hands 1, the one showing the gesture in the shape of a palm, although in other variants of the invention, the gesture of both hands 1 or even the hands 1 of other users 2 can also be identified.

In order to locate 101 the hands 2 of the user 1 in the 3D space 3 representing said general depth image 6, in said general image a skeletal model will be identified, preferably comprised by 14 joints, by means, for example, of the Random Forest 3D feature learning process. This skeletal model will be used to automatically identify users 2 in front of the camera, regarding which other features can be stored, such as height, arm length, etc. to confirm the tracking of the hands 1, and to track their hands 1 and subsequently analyze the gestures of said hands 1. This way, the 3D point cloud 5 representing the hand 1 of the user 2 can be located as the one arranged between the joint corresponding to the wrist and the end of the skeletal model.

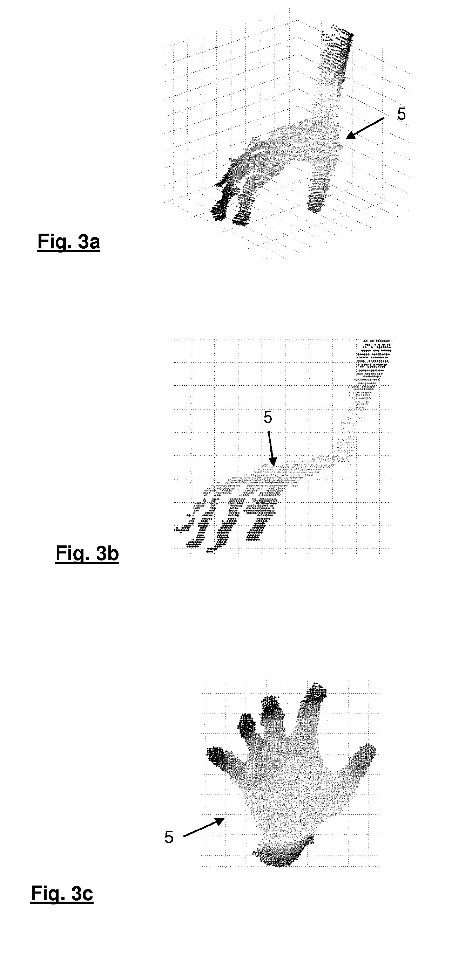

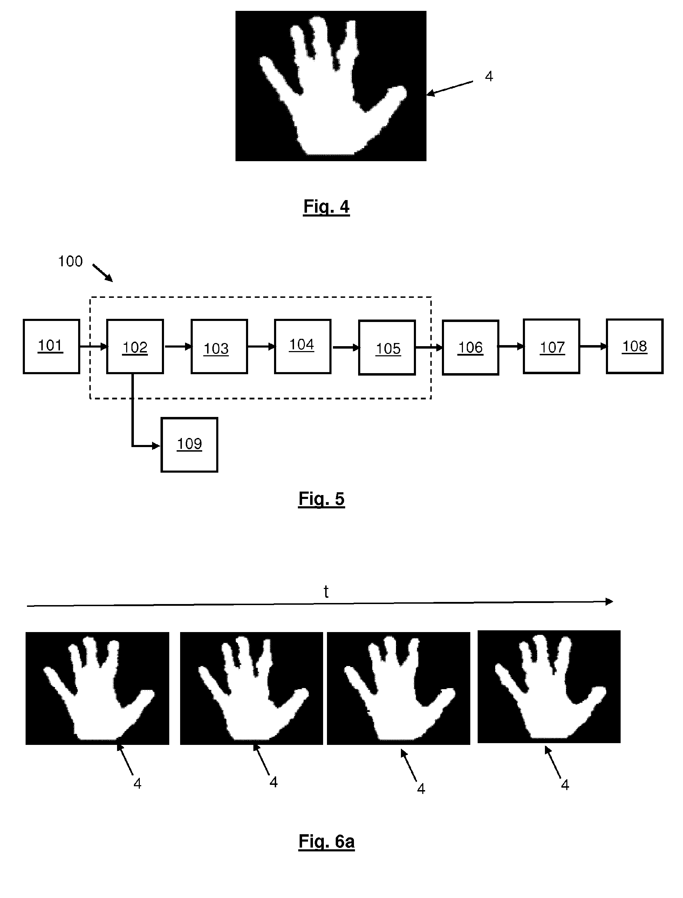

This way, we can isolate the point cloud 5 representing the hand 1 of the user 2 from the rest of the skeletal model, obtaining the point cloud 5 with the hand 1 shown in an isometric projection in Fig. 3a, where the x-y-z axes can be observed to represent the x-y-z coordinates of each point. Fig. 3b shows a lateral 2D view of the point cloud 5, wherein the y-z axes can be observed, the x coordinate being represented by means of the gradation of grey of each point, and Fig. 3c shows a frontal view of the point cloud 5, wherein the x-y axes can be observed, the z coordinate being represented by means of the gradation of grey of each point. A 2D projection 4 will be obtained from the frontal view of the point cloud 5, which may be monochrome to simplify the subsequent processing thereof, shown in Fig. 4, and the hand gesture will be determined based on this 2D projection 4. It is also provided that the 2D projection 4 may also be in greyscale.

In the procedure 100 for identifying the hand gesture, a single 2D projection 4 can be obtained 102 based on one depth image 6 or a plurality of 2D projections, each based on one depth image 6 that would form part of a sequence in a timespan t, in the form of photograms, such that the the evolution of the same hand 1 of the user 2 can be followed. Naturally, if there are several hands 1 of several users 2, the evolution of each one of them can be followed on an individual basis, although in order to simplify the explanation, we will only describe the procedure 100 for a single hand 1.

Fig. 5 illustrates the sequence of the procedure 100 for identifying the hand gesture, wherein the aforementioned steps of locating 101 and obtaining 102 the 2D projection 4 of the hand can be observed. It is possible to only obtain a single 2D projection 4 of the hand 1, but preferably, a temporary sequence of 2D projections 4 will be taken into account in order to follow the variations of the gesture of said hand, and also to correct errors as will be explained below.

In addition, it is possible to track the position of the hand 1, which is advantageously smoothed by applying the arithmetic mean of at least one of the last detected positions, preferably the last six detected positions. This way, any sudden motions of the user can be eliminated.

The position of the hand 1 that is extracted can be stored 109 and smoothed by means of an arithmetic mean of the last six known positions. When this position is stored, it can be consulted by the computer applications at any time to solve the position of said hand 1 in space to, for example, follow the trajectory thereof.

In addition, the motion of the hand 1 can be processed in order to, for example, take control and be differentiated from the rest of the hands 1 of other users 2. This can be carried out by means of predefined actions, such as the fact that raising the hand serves to request the takeover of control or other motions or gestures that allow leaving the takeover of control so that another user 2 can request the same. For example, in the case of a plurality of hands 1 in the scene 3, and therefore several 3D regions enclosing respective point clouds 5 representing said hands 1 of users 2, the procedure 100 could be limited so that it only identifies the gesture of the hand 1 in the first 3D region that made an ascending motion exceeding a predetermined threshold. Naturally, depending on the purpose of the computer application, the tracking of the position and identification of the gesture of only one hand 1 or simultaneously of several hands 1 can be carried out.

If the tracking of the hand 1 of the user 2 of interest were lost, which would inevitably occur when partial or total occlusions of the user take place, then the system would be comprised, given that another user 2 could take control. In order to solve this problem, the invention contemplates the recovery of the hand 1 that previously had control by comparing the information stored on the last user 2 that had control prior to the loss of tracking and all the users 2 existing in the scene. This way, if a user 2 in the scene matches the stored data, we can restore the control to the initial user 2. Otherwise, the system would be restarted in order for the other users not to follow the process commenced by the initial user.

With respect to Fig. 4 representing the scheme of procedure 100 for identifying the hand gesture, it is observed that after obtaining 103 each 2D projection 4 representing the hand 1 of the user 2, the step of scaling 103 the 2D projection 4 to predetermined scaling dimensions is carried out. These scaling dimensions are obtained during a configuration stage, in the form to be indicated below. These scaling dimensions will allow minimizing the impact of the variation in size of the different users 2 by normalizing in this manner all sizes to a single size. The chosen size will be the arithmetic mean of the set of hands 1 of the test users 2, calculated in the manner to be described below. This way, we achieve the normalization of the size of the 2D projection 4, and therefore, of the image of the represented hand 1, maintaining its appearance ratio. This normalization of the size of the depth image 4 will not only help to add a certain component of scaled invariance, but it will also improve the differentiation among different postures. An example of the foregoing would be the difference between fist and fist with the index finger raised. The addition of the finger would lead to a reduction in the size of the fist, facilitating the differentiation thereof with its neighboring class of just fist.

After scaling 103 the depth image 4, a feature vector will be extracted 104 from the scaled 2D projection 4. This feature vector will comprise the proportion of pixels covered by the contour of the hand, for example its percentage, the number of fingers counted in the hand, the average angle formed by the fingers counted in the hand, the time invariant coefficients and the first 44 normalized Fourier coefficients.

The time invariant coefficients will be the Hu moments as a set of invariant features to scale, rotation and translation, which will be calculated based on the depth image 4 by applying the following formulas:

$$M_{ij} = \sum_x \sum_y x^i y^j PixelIntensity(x,y)$$

$$\bar{x} = \frac{M_{10}}{M_{00}}, \bar{y} = \frac{M_{01}}{M_{00}}$$

$$\mu_{ij} = \sum_x \sum_y (x - \bar{x})^i (y - \bar{y})^j Image x,y)$$

$$\eta_{ij} = \frac{\mu_{ij}}{\mu_{00}^{1+\frac{i+j}{2}}}$$

$$Hu_1 = \eta_{20} + \eta_{02}$$
$$Hu_2 = (\eta_{20} - \eta_{02})^2 + 4\eta_{11}^2$$
$$Hu_3 = (\eta_{30} - 3\eta_{12})^2 + (3\eta_{21} - \eta_{03})^2$$
$$Hu_4 = (\eta_{30} + \eta_{12})^2 + (\eta_{21} + \eta_{03})^2$$
$$Hu_5 = (\eta_{30} - 3\eta_{12})(\eta_{30} + \eta_{12})[(\eta_{30} + \eta_{12})^2 - 3(\eta_{21} + \eta_{03})^2]$$
$$+ (3\eta_{21} - \eta_{03})(\eta_{21} + \eta_{03})[3(\eta_{30} + \eta_{12})^2 - (\eta_{21} + \eta_{03})^2]$$
$$Hu_6 = (\eta_{20} - \eta_{02})[(\eta_{30} + \eta_{12})^2 - (\eta_{21} + \eta_{03})^2] + 4\eta_{11}(\eta_{30} + \eta_{12})(\eta_{21} + \eta_{03})$$
$$Hu_7 = (3\eta_{21} - \eta_{03})(\eta_{30} + \eta_{12})[(\eta_{30} + \eta_{12})^2 - 3(\eta_{21} + \eta_{03})^2]$$
$$- (\eta_{30} - 3\eta_{12})(\eta_{21} + \eta_{03})[3(\eta_{30} + \eta_{12})^2 - (\eta_{21} + \eta_{03})^2]$$

The normalized Fourier coefficients that provide information about the shape of the hand are obtained by means of the harmonic analysis of the representation of the contour as a discrete signal.

These Fourier coefficients will be obtained based on a shape signature of the contour of the hand. In the represented variant, this shape signature will be a function formed by the complex coordinates of a set of sampled points of the contour of the hand. Naturally, given that the series formed by the modules of the Fourier transform will be symmetrical, it will only be necessary to calculate half of the coefficients. In this specific shape signature, given the points $(x_i, y_i)$ representing each point $i$ of the contour of the hand, we express the coordinates of the points in the set of the complex numbers and we center it in the origin by means of the following function:

$$f: \mathbb{R}^2 \Rightarrow \mathbb{C}$$

$$(x_i, y_i) \Rightarrow p_i = x_i - \bar{x} + j(y_i - \bar{y})$$

A sub-sampling will be carried out based on the set of complex points, in order to remain only with 64 points. We can then apply the Fourier transform to obtain the contour of the hand expressed as a linear combination of frequencies. The Fourier coefficients would be given by the following:

$$Coeff_k = \sum_{i=0}^{N-1} p_i e^{\frac{-2\pi jik}{N}} , k = 0, ..., N-1 , j = \sqrt{-1}, N = 64$$

and their inverse by the following:

$$p_i = \sum_{i=0}^{N-1} Coeff_k e^{\frac{2\pi jik}{N}} , k = 0, ..., N-1 , j = \sqrt{-1}, N = 64$$

Given that we want to include invariance to rotation and scaling, then the coefficients are normalized by using $Coeff_1$ and therefore, the new Fourier-based features would be given by:

$$C_k = \frac{|Coeff_k|}{|Coeff_1|} , k = 0, ..., N$$

Given that, after the normalization, the $C_1$ value will be 1, it will not provide any information and it can be ruled out. From all the extracted features, we will use more or less depending on the degree of detail that we want from the shape, given that high frequencies will define a high degree of detail, and lower frequencies provide the general shape, which will be a circle. In the case of the hands, 44 frequencies are more than enough. It is highlighted that, since the module of the series is formed by the different modules of the symmetrical $Coeff_k$ Fourier coefficients, it will only be necessary to calculate half of said modules of the $Coeff_k$ Fourier coefficients.

Finally, the feature vector $v$ will be defined as:

$$v = (a_1, a_2, ..., a_{54}), \qquad where \; v \in \mathbb{R}^{54}$$

$$a_1 = proportion \; occupied \; by \; the \; contour \; of \; the \; hand$$

$$a_2 = number \; of \; fingers$$

$$a_3 = \bar{\theta}, where \; \theta_t \, are \; the \; angles \; (for \; example \; in \; degrees)$$

$$of \; each \; finger, t = 0, ..., L, L = 0, ..., 5$$

$$a_4, ..., a_{10} = Hu_1, ..., Hu_7$$

$$a_{11}, \ldots, a_{54} = C_0, C_2, C_3 \ldots, C_{44}$$

It has been observed that some of the methods used to solve the optimization problems carried out in classifiers converge with greater speed if the data are normalized. On the other hand, many classifiers are distance-based and therefore are greatly affected if the different dimensions of the vectors are not in the same range.

Therefore, after extracting 104 the feature vector, each feature of the feature vector v must be normalized 105 with a maximum and minimum value for each feature, which must have been previously determined, thereby generating a normalized feature vector $v_{norm}$.

Finally, the candidate hand gesture 1 will be identified 106 based on the normalized feature vector $v_{norm}$ by means of a classifier previously trained.

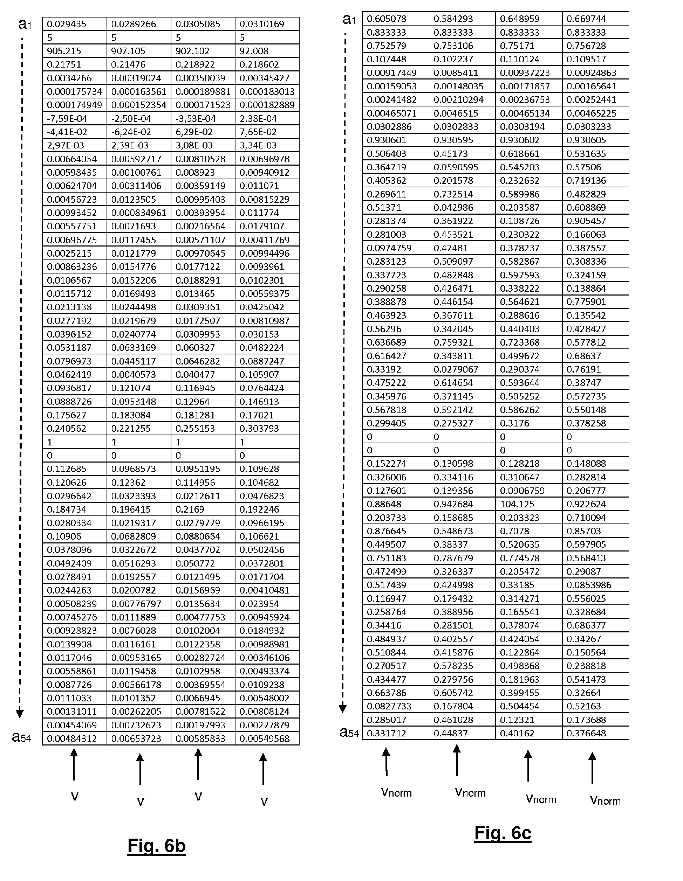

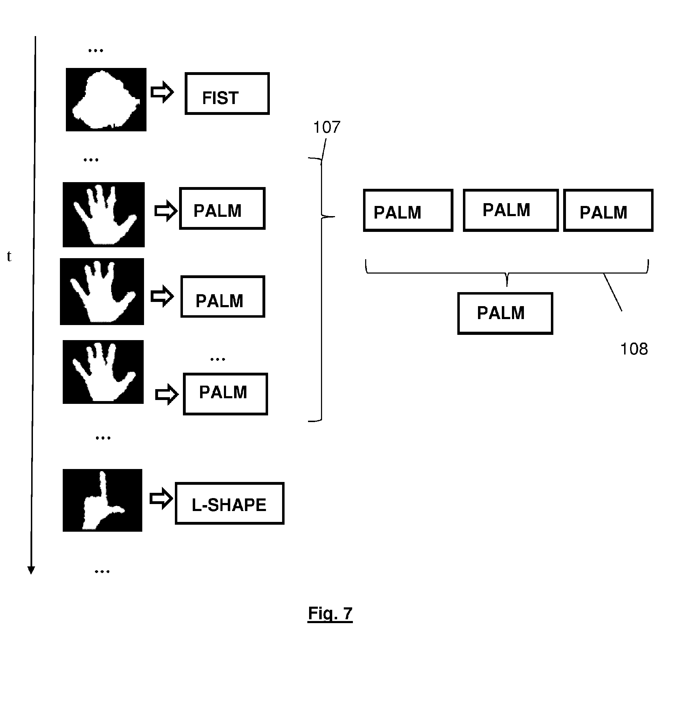

If a sequence of 2D projections 4 is obtained in a timespan t, as the one shown in Fig. 6a, the corresponding feature vector v will have to be extracted 104 for each 2D projection 4, as shown in Fig. 6b, and each feature vector will have to be normalized 105, obtaining the corresponding set of normalized feature vectors $v_{norm}$ shown in Fig. 6b. A set of candidate hand gestures 1 will be obtained based on said normalized feature vectors $v_{norm}$, with which the hand gesture can be confirmed among the candidate hand gestures by calculating 107 the mode among the identified candidate hand gestures 2 to confirm the hand gesture. Preferably, and as shown in the scheme of Fig. 7, the mode of the last fifteen candidate hand gestures can be calculated 107 to confirm the hand gesture. This calculation can be carried out by means of a first queue of fifteen positions (or as many positions with which the mode is desired to be calculated), adding in the queue each new candidate hand gesture and extracting the oldest hand gesture.

This way, a first level of error filtering is obtained in the procedure 100 for identifying the hand gesture.

If a second level of error filtering is desired in the procedure 100, a stage of verifying 108 the confirmed hand gesture can be carried out, wherein a minimum frequency of repetitions of the confirmed hand gesture of at least 2 and preferably at least 9 is expected.

This way, only when a confirmed hand gesture 1 is the same in a predetermined number of times, nine for example, this hand gesture will be decided as the verified hand gesture.

The implementation of this second filter can be also carried out through a queue wherein the different confirmed gestures are moving, calculating the verified hand gesture as illustrated in Fig. 7 each time.

In order to identify correctly the hand gesture, a stage of configuration and a stage of configuration and training of the classifier to be used during the identification procedure described above must be previously carried out. As will seen below, this stage of configuration and training has steps that are identical to the ones that were previously described.

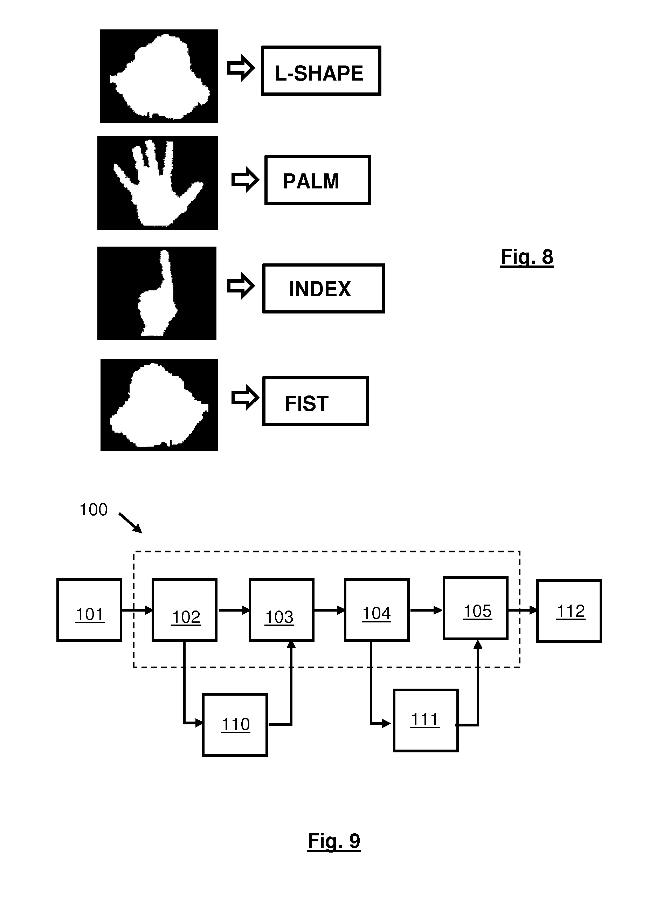

In the first place, in the stage of configuration and training of the procedure, the hand gestures 1 with which the classifier will be trained must be previously known, in order to associate the parameters to be calculated based on the data obtained with each one of the hand gestures. An example of four hand gestures is shown schematically in Fig. 8, which are desired to be associated with the respective 2D projections 4 of hands 1 that can be trained in a classifier. This way, after training the classifier by means of feature vectors v extracted from known hand gestures, the estimation of the most probable hand gesture corresponding to the hand 2 of the user 1 will be achieved based on a feature vector extracted from a 2D projection 4 from which the hand gesture is unknown. Naturally, the classifier can be trained with more o less hand gestures, as deemed convenient.

As shown in the scheme of this stage of configuration and training, shown in Fig. 9 and in which is highlighted that several stages are identical to the ones previously described in the procedure of Fig. 5, a hand must be first located 101 in a 3D space and at least one 2D projection 4 must be obtained 102 in a timespan t based on a 3D point cloud 5 representing said hand 1. This step will be identical to the procedure described above.

The dimensions of the different 2D projections 4 representing the hand will accumulate, such that the predetermined scaling dimensions can be solved 110 as the arithmetic mean of the dimensions of the last depth image obtained with the dimensions of the depth images that were previously obtained.

The maximum and minimum values of the each parameter of the feature vector will be stored in order to normalize the future feature vectors to be obtained in real time in order to recognize a hand gesture of a user.

The validated and normalized feature vectors are stored. Given that in the stage of configuration, the subject makes a specific posture, we can identify the feature vector corresponding to the hand posture made with this hand posture. This way, the labeling of the entire set of training of an automatic shape is achieved.

After this step, the contents of the 2D projection 4 must be scaled 103 to the predetermined scaling dimensions and the feature vector v must be extracted 104 from the 2D projection 4, just like during the identification procedure described above, said feature vector comprising the same features described above, that is to say:

- proportion occupied by the contour of the hand
- the number of fingers counted in the hand

- the average angle formed by the fingers counted in the hand
- time invariant coefficients
- normalized Fourier coefficients

and, after a set of feature vectors is obtained from several 2D projections 4 corresponding to the same known hand gesture, a manual validation stage can be carried out by means of the color images registered with the segmentation of the hand and its center of mass, or simply by visualizing the different 2D projections 4 in order to manually analyze and validate the saved 2D projections 4 in the search for erroneous segmentations with the purpose of ruling out these erroneous 2D projections 4 to improve the training set.

After extracting 104 the corresponding feature vector from each 2D projection 4, the maximum and minimum value of each feature must be established 111 for the set of feature vectors associated with the same hand gesture 1 and the features of each feature vector must be normalized 105 based on the maximum and minimum values established for each feature.

This step of normalizing 105 can be explained by taking the feature vector $v$, where $v \in \mathbb{R}^{54}$. $M$ is the matrix containing all the training vectors associated with the same gesture, where $M \in \mathcal{M}_{n \times 54}(\mathbb{R})$ and $n$ corresponds to the number of training vectors.

$$v_i = \frac{v_i - MIN(M_{*i})}{MAX(M_{*i}) - MIN(M_{*i})}$$

With which each one of the features of the feature vector v would be normalized.

Finally, with the set of normalized feature vectors corresponding to the same known hand gesture, a classifier will be trained 112 to predict said known hand gesture. For example, the vector support machine with a radial base function (RBF) shown below can be used in the classification:

$$\Phi(u, v) = e^{-\gamma|u-v|^2}$$

Other known classifiers can be used, such as distance-based classifiers. The learned model will be stored. It will be used during the prediction of a hand gesture 1 of a user 2 in order to identify the gesture of a hand 1 corresponding to a feature vector obtained based on a 2D projection 4.

The invention provides the storage of two models. One for the right hand and the other for the left. This models can be stored and used thereafter to identify hand gestures based on this configuration and training.

**Claims**

1. Procedure (100) for identifying a hand gesture (1) of a user (2), that comprises:

   - locating (101) a hand in a 3D space (3) and obtaining (102) at least one 2D projection (4) from a point cloud (5) representing said hand, **characterized in that**, for each 2D projection that is obtained, the following steps are carried out:
   - scaling (103) the 2D projection to predetermined scaling dimensions;
   - extracting (104) a feature vector (v) from the scaled 2D projection that comprises:

     o the proportion occupied by the contour of the hand;
     o the number of fingers counted in the hand;
     o the average angle formed by the fingers counted in the hand;
     o time invariant coefficients;
     o normalized Fourier coefficients;

- normalizing (105) each feature of the feature vector, generating a normalized feature vector ($v_{norm}$); and
- identifying (106) a candidate hand gesture based on the normalized feature vector by means of a classifier previously trained.

2. Procedure (100) according to the preceding claim, **characterized in that** the stage of normalizing (105) each feature of the feature vector (v) is carried out by means of previously determined maximum and minimum values for each feature.

3. Procedure (100) according to any one of the preceding claims, **characterized in that**, after obtaining a plurality of candidate hand gestures, the procedure comprises calculating (107) the mode among the candidate hand gestures to confirm the hand gesture.

4. Procedure (100) according to the preceding claim, **characterized in that** the procedure comprises calculating (107) the mode among the last 15 candidate hand gestures to confirm the hand gesture.

5. Procedure (100) according to any one of the preceding claims, **characterized in that** it also comprises a stage of verifying (108) the confirmed hand gesture, wherein a minimum frequency of repetitions of the confirmed hand gesture is at least 2.

6. Procedure (100) according to the preceding claim, **characterized in that** in the stage of verifying (108) the calculated hand gesture, the minimum frequency of repetitions of the confirmed hand gesture is at least 9.

7. Procedure (100) according to any one of the preceding claims, **characterized in that** it also comprises storing (109) the position of the located 3D region enclosing the representation of the hand of the user, and **in that** the position of the stored 3D region is smoothed by applying the arithmetic mean of at least one of the last detected positions.

8. Procedure (100) according to the preceding claim, **characterized in that** the position of the stored 3D region is smoothed by applying the arithmetic mean of the last 6 detected positions.

9. Procedure (100) according to any one of the preceding claims, **characterized in that**, there being a plurality of 3D regions enclosing respective point clouds (5) representing hands (1) of users, only the gesture of the hand of the first 3D region making an ascending motion exceeding a predetermined threshold is identified.

10. Procedure (100) according to any one of the preceding claims, **characterized in that** the step of locating (101) the 3D region enclosing a point cloud (5) representing the hand (1) of a user (2) comprises capturing a point cloud projected over the user and determining a skeletal model, the 3D region enclosing a point cloud representing the hand being determined as the one between the joint corresponding to the wrist and the end of the skeletal model.

11. Procedure (100) according to any one of the preceding claims, **characterized in that** the feature vector (v) comprises the first 44 normalized Fourier coefficients.

12. Procedure (100) according to any one of the preceding claims, **characterized in that** it also comprises a stage of configuration and training of a classifier that comprises, for several known hand gestures (1), locating (101) a hand in a 3D space (3) and obtaining (102) at least one 2D projection (4) based on a 3D point cloud (5) representing said hand, and:

   - solving (110) the predetermined scaling dimensions as the arithmetic mean of the dimensions of said depth image with the dimensions of the depth images that were previously obtained;
   - scaling (103) the content of the depth image to the predetermined scaling dimensions;
   - extracting (104) a feature vector (v) from the scaled 2D projection that comprises:

      o the proportion occupied by the contour of the hand;
      o the number of fingers counted in the hand;
      o the average angle formed by the fingers counted in the hand;
      o time invariant coefficients;
      o normalized Fourier coefficients;
      and after obtaining a set of feature vectors (v) from different 2D projections corresponding to the same known hand gesture:

- establishing (111) the parameters of maximum and minimum value of each feature for the normalization of the features of the feature vector;
- normalizing (105) the features of each feature vector based on the maximum and minimum values established for each feature and obtaining a set of normalized feature vectors ($v_{norm}$);
- training (112) a classifier with the set of normalized feature vectors corresponding to the same known hand gesture to predict said known hand gesture.

13. Computer program adapted to carry out the procedure (100) of the claims 1 to 12.

14. Data processing apparatus (20) that comprises means to carry out the procedure (100) of the claims 1 to 12.

15. System (30) for recognizing a hand gesture that comprises an apparatus according to the preceding claim, connected to means for obtaining a 3D region (21) enclosing a representation of the hand (1) of a user (2).

**Fig. 1**

**Fig. 2**

**Fig. 3a**

**Fig. 3b**

**Fig. 3c**

EP 2 980 728 A1
EP 2 980 728 A1

**Fig. 4**

**Fig. 5**

**Fig. 6a**

$a_1$

| | | | |
|---|---|---|---|
| 0.0294355 | 0.02892665 | 0.03050855 | 0.03101695 |
| 905.215 | 907.105 | 902.102 | 92.008 |
| 0.21751 | 0.21476 | 0.218922 | 0.218602 |
| 0.0034266 | 0.00319024 | 0.00350039 | 0.00345427 |
| 0.000175734 | 0.000163561 | 0.000189881 | 0.000183013 |
| 0.000174949 | 0.000152354 | 0.000171523 | 0.000182889 |
| -7,59E-04 | -2,50E-04 | -3,53E-04 | 2,38E-04 |
| -4,41E-02 | -6,24E-02 | 6,29E-02 | 7,65E-02 |
| 2,97E-03 | 2,39E-03 | 3,08E-03 | 3,34E-03 |
| 0.00664054 | 0.00592717 | 0.00810528 | 0.00696978 |
| 0.00598435 | 0.00100761 | 0.008923 | 0.00940912 |
| 0.00624704 | 0.00311406 | 0.00359149 | 0.011071 |
| 0.00456723 | 0.0123505 | 0.00995403 | 0.00815229 |
| 0.00993452 | 0.000834961 | 0.00393954 | 0.011774 |
| 0.00557751 | 0.0071693 | 0.00216564 | 0.0179107 |
| 0.00696775 | 0.0112455 | 0.00571107 | 0.00411769 |
| 0.0025215 | 0.0121779 | 0.00970645 | 0.00994496 |
| 0.00863236 | 0.0154776 | 0.0177122 | 0.0093961 |
| 0.0106567 | 0.0152206 | 0.0188291 | 0.0102301 |
| 0.0115712 | 0.0169493 | 0.013465 | 0.00559375 |
| 0.0213138 | 0.0244498 | 0.0309361 | 0.0425042 |
| 0.0277192 | 0.0219679 | 0.0172507 | 0.00810987 |
| 0.0396152 | 0.0240774 | 0.0309953 | 0.030153 |
| 0.0531187 | 0.0633169 | 0.060327 | 0.0482224 |
| 0.0796973 | 0.0445117 | 0.0646282 | 0.0887247 |
| 0.0462419 | 0.0040573 | 0.040477 | 0.105907 |
| 0.0936817 | 0.121074 | 0.116946 | 0.0764424 |
| 0.0888726 | 0.0953148 | 0.12964 | 0.146913 |
| 0.175627 | 0.183084 | 0.181281 | 0.17021 |
| 0.240562 | 0.221255 | 0.255153 | 0.303793 |
| 1 | 1 | 1 | 1 |
| 0 | 0 | 0 | 0 |
| 0.112685 | 0.0968573 | 0.0951195 | 0.109628 |
| 0.120626 | 0.12362 | 0.114956 | 0.104682 |
| 0.0296642 | 0.0323393 | 0.0212611 | 0.0476823 |
| 0.184734 | 0.196415 | 0.2169 | 0.192246 |
| 0.0280334 | 0.0219317 | 0.0279779 | 0.0966195 |
| 0.10906 | 0.0682809 | 0.0880664 | 0.106621 |
| 0.0378096 | 0.0322672 | 0.0437702 | 0.0502456 |
| 0.0492409 | 0.0516293 | 0.050772 | 0.0372801 |
| 0.0278491 | 0.0192557 | 0.0121495 | 0.0171704 |
| 0.0244263 | 0.0200782 | 0.0156969 | 0.00410481 |
| 0.00508239 | 0.00776797 | 0.0135634 | 0.023954 |
| 0.00745276 | 0.0111889 | 0.00477753 | 0.00945924 |
| 0.00928823 | 0.0076028 | 0.0102004 | 0.0184932 |
| 0.0139908 | 0.0116161 | 0.0122358 | 0.00988981 |
| 0.0117046 | 0.00953165 | 0.00282724 | 0.00346106 |
| 0.00558861 | 0.0119458 | 0.0102958 | 0.00493374 |
| 0.0087726 | 0.00566178 | 0.00369554 | 0.0109238 |
| 0.0111033 | 0.0101352 | 0.0066945 | 0.00548002 |
| 0.00131011 | 0.00262205 | 0.00781622 | 0.00808124 |
| 0.00454069 | 0.00732623 | 0.00197993 | 0.00277879 |
| 0.00484312 | 0.00653723 | 0.00585833 | 0.00549568 |

$a_{54}$

$V$ $V$ $V$ $V$

**Fig. 6b**

$a_1$

| | | | |
|---|---|---|---|
| 0.605078 | 0.584293 | 0.648959 | 0.669744 |
| 0.833333 | 0.833333 | 0.833333 | 0.833333 |
| 0.752579 | 0.753106 | 0.75171 | 0.756728 |
| 0.107448 | 0.102237 | 0.110124 | 0.109517 |
| 0.00917449 | 0.0085411 | 0.00937223 | 0.00924863 |
| 0.00159053 | 0.00148035 | 0.00171857 | 0.00165641 |
| 0.00241482 | 0.00210294 | 0.00236753 | 0.00252441 |
| 0.00465071 | 0.0046515 | 0.00465134 | 0.00465225 |
| 0.0302886 | 0.0302833 | 0.0303194 | 0.0303233 |
| 0.930601 | 0.930595 | 0.930602 | 0.930605 |
| 0.506403 | 0.45173 | 0.618661 | 0.531635 |
| 0.364719 | 0.0590595 | 0.545203 | 0.57506 |
| 0.405362 | 0.201578 | 0.232632 | 0.719136 |
| 0.269611 | 0.732514 | 0.589986 | 0.482829 |
| 0.51371 | 0.042986 | 0.203587 | 0.608869 |
| 0.281374 | 0.361922 | 0.108726 | 0.905457 |
| 0.281003 | 0.453521 | 0.230322 | 0.166063 |
| 0.0974759 | 0.47481 | 0.378237 | 0.387557 |
| 0.283123 | 0.509097 | 0.582867 | 0.308336 |
| 0.337723 | 0.482848 | 0.597593 | 0.324159 |
| 0.290258 | 0.426471 | 0.338222 | 0.138864 |
| 0.388878 | 0.446154 | 0.564621 | 0.775901 |
| 0.463923 | 0.367611 | 0.288616 | 0.135542 |
| 0.56296 | 0.342045 | 0.440403 | 0.428427 |
| 0.636689 | 0.759321 | 0.723368 | 0.577812 |
| 0.616427 | 0.343811 | 0.499672 | 0.68637 |
| 0.33192 | 0.0279067 | 0.290374 | 0.76191 |
| 0.475222 | 0.614654 | 0.593644 | 0.38747 |
| 0.345976 | 0.371145 | 0.505252 | 0.572735 |
| 0.567818 | 0.592142 | 0.586262 | 0.550148 |
| 0.299405 | 0.275327 | 0.3176 | 0.378258 |
| 0 | 0 | 0 | 0 |
| 0 | 0 | 0 | 0 |
| 0.152274 | 0.130598 | 0.128218 | 0.148088 |
| 0.326006 | 0.334116 | 0.310647 | 0.282814 |
| 0.127601 | 0.139356 | 0.0906759 | 0.206777 |
| 0.88648 | 0.942684 | 104.125 | 0.922624 |
| 0.203733 | 0.158685 | 0.203323 | 0.710094 |
| 0.876645 | 0.548673 | 0.7078 | 0.85703 |
| 0.449507 | 0.38337 | 0.520635 | 0.597905 |
| 0.751183 | 0.787679 | 0.774578 | 0.568413 |
| 0.472499 | 0.326337 | 0.205472 | 0.29087 |
| 0.517439 | 0.424998 | 0.33185 | 0.0853986 |
| 0.116947 | 0.179432 | 0.314271 | 0.556025 |
| 0.258764 | 0.388956 | 0.165541 | 0.328684 |
| 0.34416 | 0.281501 | 0.378074 | 0.686377 |
| 0.484937 | 0.402557 | 0.424054 | 0.34267 |
| 0.510844 | 0.415876 | 0.122864 | 0.150564 |
| 0.270517 | 0.578235 | 0.498368 | 0.238818 |
| 0.434477 | 0.279756 | 0.181963 | 0.541473 |
| 0.663786 | 0.605742 | 0.399455 | 0.32664 |
| 0.0827733 | 0.167804 | 0.504454 | 0.52163 |
| 0.285017 | 0.461028 | 0.12321 | 0.173688 |
| 0.331712 | 0.44837 | 0.40162 | 0.376648 |

$a_{54}$

$V_{norm}$ $V_{norm}$ $V_{norm}$ $V_{norm}$

**Fig. 6c**

15

**Fig. 7**

**Fig. 8**

**Fig. 9**

## EUROPEAN SEARCH REPORT

Application Number

EP 14 38 2303

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | JORDI ABELLA ET AL: "Multi-modal descriptors for multi-class hand pose recognition in human computer interaction systems", PROCEEDINGS OF THE 15TH ACM ON INTERNATIONAL CONFERENCE ON MULTIMODAL INTERACTION, ICMI '13, 1 January 2013 (2013-01-01), pages 503-508, XP055168723, New York, New York, USA DOI: 10.1145/2522848.2532596 ISBN: 978-1-45-032129-7 | 1-4,7,8, 10-15 | INV. G06K9/00 |
| A | * the whole document * ----- | 5,6 | |
| T | SIMON CONSEIL ET AL: "Comparison of Fourier Descriptors and Hu Moments for Hand Posture Recognition", 15TH EUROPEAN SIGNAL PROCESSING CONFERENCE, EUSIPCO 2007, 1 January 2007 (2007-01-01), pages 1960-1964, XP055169122, * page 1963, right-hand column, last paragraph; tables 1-3 * * page 1962, right-hand column, paragraph 2 * ----- | 1-15 | |
| T | "Chapter 18 - Contextual Action Recognition" In: Thomas B. Moeslund: "Visual Analysis of Humans", 1 January 2011 (2011-01-01), Springer, XP002735942, pages 355-376, * page 357, last paragraph - page 358, paragraph 1g * * page 364, paragraph 3 * ----- | 5,6 | TECHNICAL FIELDS SEARCHED (IPC) G06K G06T |

~~The present search report has been drawn up for all claims~~

| Place of search | Date of completion of the search | Examiner |
|---|---|---|
| The Hague | 13 February 2015 | Granger, Bruno |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

Europäisches
Patentamt

European
Patent Office

Office européen
des brevets

**Application Number**

EP 14 38 2303

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-8, 10-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 14 38 2303

The Search Division considers that the present European patent application does not comply with the requirements of unity of invention and relates to several inventions or groups of inventions, namely:

    1. claims: 1-8, 10-15

        verifying a minimum frequency of repetitions of the
        confirmed hand gesture
                        ---

    2. claim: 9

        identifying only the gesture of the hand of the first 3D
        region making an ascending motion exceeding a predetermined
        threshold is identified.
                        ---

# EP 2 980 728 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014035805 A
- US 201336524 B